# EUROPÄISCHE PATENTANMELDUNG

(11) **EP 3 521 217 A1**
(43) Veröffentlichungstag der Anmeldung: **07.08.2019**
(21) Anmeldenummer: 18154819.9
(22) Anmeldetag: 02.02.2018
(51) Int. Cl.: B65G 47/53, B07C 5/02, B65G 43/08, B65G 47/24

(54) **VORRICHTUNG UND VERFAHREN ZUM FÖRDERN VON STÜCKGÜTERN EINER ERSTEN UND EINER ZWEITEN KLASSE HIN ZU EINEM SORTER**

(71) Anmelder: Siemens Aktiengesellschaft, 80333 München (DE)
(72) Erfinder: ASCHPURWIS, Carsten, 78464 Konstanz (DE)
(74) Vertreter: Maier, Daniel Oliver

(57) **Zusammenfassung**

Die Erfindung offenbart eine Vorrichtung (2) und ein Verfahren zum kontrollierten Fördern von Stückgütern einer ersten Klasse (4a) und Stückgütern einer zweiten Klasse (4b) hin zu einem Sorter (6). Die Vorrichtung umfasst eine Zuführvorrichtung (8) und eine Einschleusvorrichtung (10). Die Zuführvorrichtung (8) mündet seitlich in die Einschleusvorrichtung (10) und die Einschleusvorrichtung (10) mündet seitlich in den Sorter (6). Die Zuführvorrichtung (8) umfasst eine erste und eine zweite Zuführförderstrecke (8a, 8b). Die Einschleusvorrichtung (10) umfasst eine erste und eine zweite Einschleusförderstrecke (10a, 10b), deren Auflageflächen (12a, 12b) im Wesentlichen auf gleicher Höhe nebeneinander angeordnet sind. Die erste respektive zweite Zuführförderstrecke (8a, 8b) mündet in die erste respektive zweite Einschleusförderstrecke (10a, 10b). Ein Übergang (14) zwischen der ersten und der zweiten Einschleusförderstrecke (10a, 10b) ist barrierefrei ausgestaltet. Ein Stückgut der ersten Klasse (4a) wird entweder nur auf der ersten oder zweiten Zuführförderstrecke (8a, 8b) und nur auf der ersten oder zweiten Einschleusförderstrecke (10a, 10b) transportiert. Ein Stückgut der zweiten Klasse (4b) wird auf der ersten oder zweiten Zuführförderstrecke (8a, 8b), dann aber zugleich auf der ersten und zweiten Einschleusförderstrecke (10a, 10b) aufliegend transportiert.

## Beschreibung

Die vorliegende Erfindung betrifft eine Vorrichtung und ein Verfahren zum Fördern von Stückgütern einer ersten und einer zweiten Klasse hin zu einem Sorter.

Im Postsendungsbereich wird ein Einbringen von Stückgütern wie Paketen auf einen Sorter mit Einschleusvorrichtungen wie High-Speed-Inductions durchgeführt. Im Postsendungsbereich wird eine große Bandbreite unterschiedlich großer und schwerer Pakete verarbeitet, so dass die zum Einschießen verwendete Einschleusvorrichtung sowohl für kleinere Pakete und Päckchen, als auch für die größten und schwersten Pakete ausgelegt sein muss. Da ein überbreites High-Speed-Induction-Band aufwendig zu realisieren ist, werden häufig zwei High-Speed-Induction-Bänder als Einschleusvorrichtung nebeneinander positioniert. Die High-Speed-Induction-Bänder sind gleichartig ausgestaltet und werden gleichartig angesteuert, so dass immer nur ein Paket eingeschossen wird. Große und kleine Pakete werden von einer einzigen Zuführvorrichtung auf die Einschleusvorrichtung überführt.

Da die Vorrichtungen und Verfahren des Standes der Technik auf das Einschießen von großen Stückgütern ausgelegt sind, ist ihre Kapazität beschränkt. Bei Verwendung schmalerer Vorrichtungen, die auf kleinere Stückgüter ausgelegt sind, wäre die Kapazität zwar erhöht, allerdings könnten große Stückgüter nicht auf ebendiesen schmaleren Vorrichtungen befördert werden. Daher müsste eine Vorsortierung durchgeführt werden.

Der vorliegenden Erfindung liegt daher die Aufgabe zugrunde, eine verbesserte Vorrichtung und ein verbessertes Verfahren zum Fördern von Stückgütern unterschiedlicher Klassen hin zu einem Sorter bereitzustellen. Diese Aufgabe wird durch die in den unabhängigen Ansprüchen beschriebenen Lösungen gelöst.

Die erfindungsgemäße Lösung sieht eine Vorrichtung zum kontrollierten Fördern von Stückgütern einer ersten Klasse und Stückgütern einer zweiten Klasse hin zu einem Sorter vor, umfassend eine Zuführvorrichtung und eine Einschleusvorrichtung. Die Zuführvorrichtung mündet seitlich in die Einschleusvorrichtung und die Einschleusvorrichtung seitlich in den Sorter. Die Zuführvorrichtung umfasst eine erste und eine zweite Zuführförderstrecke, die direkt aneinander angrenzend oder in einem Abstand zueinander angeordnet sind. Die Einschleusvorrichtung umfasst eine erste und eine zweite Einschleusförderstrecke, deren Auflageflächen im Wesentlichen auf gleicher Höhe nebeneinander angeordnet sind und die sich über die gesamte oder mindestens einen Abschnitt der Einschleusvorrichtung erstrecken. Die erste Zuführförderstrecke mündet so in die Einschleusvorrichtung, dass sie direkt oder über einen Abschnitt der Einschleusvorrichtung in die erste Einschleusförderstrecke mündet. Die zweite Zuführförderstrecke mündet so in die Einschleusvorrichtung, dass sie direkt oder über einen Abschnitt der Einschleusvorrichtung in die zweite Einschleusförderstrecke mündet. Ein Übergang zwischen der ersten und der zweiten Einschleusförderstrecke ist barrierefrei ausgestaltet, so dass ein Stückgut der zweiten Klasse zugleich auf der ersten und auf der zweiten Einschleusförderstrecke beförderbar ist.

Unter einer Zuführvorrichtung soll jegliche Vorrichtung verstanden werden, die ausgestaltet ist, Stückgüter auf die Einschleusvorrichtung einzubringen. Bei direkt aneinander angrenzenden Zuführförderstrecken kann die Unterteilung der Zuführvorrichtung in einzelne Zuführförderstrecken auch rein gedanklich oder über eine unterschiedliche Beladung der Stückgüter auf die einzelnen Zuführförderstrecken erfolgen. Die Aufteilung in einzelne Zuführförderstrecken muss nicht unmittelbar vor einem Münden in die Einschleusvorrichtung vorliegen.

Die Klassifizierung der Stückgüter in Stückgüter einer ersten und einer zweiten Klasse richtet sich nach ihrer Auflage auf den Einschleusförderstrecken. Sobald ein Stückgut nicht nur auf einer, sondern auf beiden Einschleusförderstrecken zugleich aufliegt, wird es als Stückgut zweiter Klasse angesehen. Beispielsweise kann ein und dasselbe längliche Stückgut bei einer Ausrichtung entlang der Transportrichtung der Förderstrecken als Stückgut erster Klasse angesehen werden und bei einer Ausrichtung quer zur Transportrichtung der Förderstrecken als Stückgut zweiter Klasse gelten. Diese Klassifizierung kann daher auf vielfältige Weise beeinflusst werden, beispielsweise durch eine auf der Zuführvorrichtung angeordnete Ausrichtungsvorrichtung. Ob es sich um ein Stückgut erster oder zweiter Klasse handelt, ist neben seiner Ausrichtung auf der Förderstrecke insbesondere von seinen Ausmaßen relativ zu den Abmessungen der Förderstrecken abhängig. Allgemein gilt allerdings, dass ein großes Stückgut typischerweise ein Stückgut zweiter Klasse und dass ein kleines Stückgut typischerweise ein Stückgut erster Klasse ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann die Vorrichtung zudem eine mit der Vorrichtung verbindbare Steuerung umfassen. Die Steuerung kann adaptiert sein, die Vorrichtung, insbesondere die Zuführvorrichtung und/oder die Einschleusvorrichtung, so anzusteuern, dass
a) Stückgüter der ersten Klasse von der ersten Zuführförderstrecke auf die erste Einschleusförderstrecke transportiert werden;
b) Stückgüter der ersten Klasse von der zweiten Zuführförderstrecke auf die zweite Einschleusförderstrecke transportiert werden; und
c) das Stückgut der zweiten Klasse von der ersten und/oder zweiten Zuführförderstrecke so hin zur Einschleusvorrichtung transportiert wird, dass das Stückgut der zweiten Klasse zugleich von der ersten und zweiten Einschleusförderstrecke transportiert wird.

Die Ansteuerung der Vorrichtung erlaubt ein sauberes Überführen und Transportieren der Stückgüter. So kann durch Anpassung der Fördergeschwindigkeiten verhindert werden, dass ein Stückgut mit zu viel Schwung von der Zuführvorrichtung auf die Einschleusvorrichtung überführt wird, unkontrolliert gleitet und/oder verrutscht und so seine Ausrichtung ändert. Ohne eine gezielte Ansteuerung kann so ein auf der Zuführvorrichtung als Stückgut der ersten Klasse klassifiziertes Stückgut auf der Einschleusvorrichtung als Stückgut der zweiten Klasse vorliegen. Bei gleichzeitiger Überführung mehrerer Stückgüter kann durch die Ansteuerung eine Kollision verhindert werden. Die Ansteuerung ermöglicht zudem ein kontrolliertes Einschleusen der Stückgüter auf den Sorter.

Gemäß einer weiteren Ausführungsform kann die erste und/oder die zweite Einschleusförderstrecke individuell ansteuerbare Segmente aufweisen, wobei die Segmente hintereinander entlang einer Förderrichtung der Stückgüter von der Zuführvorrichtung hin zum Sorter angeordnet sein können. Auf diese Weise kann durch zwischenzeitliches Stillstehen einzelner Segmente eine Optimierung des Stückgüterflusses erzielt werden.

Um die Stückgüter mit angepasster Geschwindigkeit und zu passender Zeit auf den Sorter einzuschießen, kann die Einschleusvorrichtung und/oder die erste Einschleusförderstrecke und/oder die zweite Einschleusförderstrecke jeweils über ihre gesamte Länge oder segmentweise mit individuell ansteuerbarer Fördergeschwindigkeit antreibbar ausgestaltet sein. Hierbei kann die individuelle Ansteuerbarkeit der Fördergeschwindigkeit auch ein koordiniertes Ansteuern der Segmente und weiterer Komponenten der Einschleusvorrichtung umfassen. Ein individuelles Antreiben der Segmente mit unterschiedlicher, segmentweise in Transportrichtung ansteigender Fördergeschwindigkeit beschleunigt die Stückgüter. Eine zeitliche Anpassung an die Fördergeschwindigkeit des Sorters und seine Belegung ermöglicht ein sehr kontrolliertes Einschießen der Stückgüter auf den Sorter.

Gemäß einer weiteren Ausführungsform kann die Vorrichtung zudem eine Detektionseinheit, beispielsweise ein Messlichtgitter, umfassen, die ausgestaltet ist, Förderparameter eines Stückguts wie seine Lage und/oder Größe und/oder Orientierung und/oder Fördergeschwindigkeit auf der Vorrichtung zu erfassen. Dies ermöglicht sowohl eine Überwachung des Stückgüterflusses, als auch eine gezielte Ansteuerung der Zuführvorrichtung und/oder der Einschleusvorrichtung, insbesondere der Einschleusförderstrecken und seiner Segmente, in Antwort auf die detektierten Förderparameter.

Gemäß einer weiteren Ausführungsform kann eine Befestigung der Detektionseinheit auf einer ersten und/oder zweiten Seite der Einschleusvorrichtung angeordnet sein, wobei die erste und die zweite Seite dem Übergang zwischen der ersten und der zweiten Einschleusförderstrecke abgewandt sein kann. Auf diese Weise bildet die Detektionseinheit keine Störkontur und es kann dennoch über die gesamte Breite der Einschleusvorrichtung detektiert werden. Die Befestigung kann so sein, dass die Detektionseinheit neben und/oder oberhalb der Einschleusförderstrecken angeordnet sein kann.

Damit Stückgüter beim bzw. nach dem Überführen auf die Einschleusvorrichtung nicht an Störkonturen des Übergangs von erster und zweiter Einschleusförderstrecke, beispielsweise einer Bandkante, hängen bleiben und somit diese bzw. sich selbst beschädigen und/oder verschleißen, kann die Einschleusvorrichtung ein nach den Zuführförderstrecken angeordnetes Übergabeband umfassen, welches zugleich in die erste und die zweite Einschleusförderstrecke mündet. So kann ein Stückgut nach dem Überführen unproblematisch auf dem Übergabeband rutschen.

Um einen hinreichenden Kontakt zwischen Stückgut und Einschleusförderstrecke zu erzielen, kann die Auflagefläche der ersten und/oder zweiten Einschleusförderstrecke über ihre gesamte Länge oder zumindest teilweise hin zu dem Übergang zwischen der ersten und der zweiten Einschleusförderstrecke fallend ausgerichtet sein, so dass die Auflageflächen eine Neigung zueinander aufweisen.

Damit auch bei großer Neigung der Auflageflächen zueinander keine zu große Stufe als Störkontur auftritt, kann die Neigung der Auflageflächen einzelner Segmente der ersten und/oder der zweiten Einschleusförderstrecke hin zu dem Übergang entlang der Förderrichtung der Stückgüter hin zum Sorter ansteigen. So kann entlang der Transportrichtung der Einschleusförderstrecke das erste Segment nur leicht geneigt sein, das nächste stärker usw. bis zur größten Überhöhung. Danach kann es wieder zurück auf ebene Auflageflächen und ebenen Transport gehen.

Um auf alternative Weise einen hinreichenden Kontakt zwischen Stückgut und Einschleusförderstrecke zu erzielen, kann die erste und/oder die zweite Einschleusförderstrecke entlang einer Förderrichtung der Stückgüter, welche von der Zuführvorrichtung hin zum Sorter weist, über ihre gesamte Länge und/oder segmentweise umlaufende Nocken aufweisen. Hierbei kann die Nocke auf dem eigentlichen Fördermittel der Einschleusförderstrecke selber angebracht sein, oder aber als eigenes Fördermittel ausgestaltet sein. Bei der letztgenannten Variante hat das eigene Fördermittel, beispielsweise ein Gurt oder ein Riemen, eine größere Höhe als das daneben laufende Band. Auch so wird die Funktion der umlaufenden Nocke erfüllt. Die Einschleusförderstrecke umfasst bei dieser Ausführungsform sowohl das eigentliche Fördermittel der Einschleusförderstrecke, als auch das daneben liegende, als Nocke ausgestaltete Fördermittel.

Gemäß einer weiteren Ausführungsform kann die Steuerung adaptiert sein, die Vorrichtung, insbesondere die erste und/oder die zweite Einschleusförderstrecke, so anzusteuern, dass die von der Detektionseinheit erfassten Förderparameter manipuliert werden, so dass ein zugleich von der ersten und zweiten Einschleusförderstrecke transportiertes Stückgut der zweiten Klasse in seiner Ausrichtung korrigiert werden kann. Bei relativ kleinen Stückgütern zweiter Klasse und nur geringer Überlappung kann so unter Umständen sogar ein Stückgut der zweiten Klasse in ein Stückgut der ersten Klasse überführt werden.

Gemäß einer weiteren Ausführungsform können die erste und/oder die zweite Einschleusförderstrecke Beschleunigungsbänder (High-Speed-Induction) umfassen.

Hinsichtlich eines Verfahrens wird die vorstehend genannte Aufgabe gelöst durch ein Verfahren zum kontrollierten Fördern von Stückgütern einer ersten Klasse und Stückgütern einer zweiten Klasse hin zu einem Sorter. Das Verfahren umfasst die Verfahrensschritte:
a) Fördern eines Stückguts der ersten und/oder zweiten Klasse auf einer ersten und/oder zweiten Zuführförderstrecke einer Zuführvorrichtung.
b) Überführen des Stückguts von der Zuführvorrichtung (8) auf eine Einschleusvorrichtung.
c) Fördern des Stückguts auf einer ersten und/oder zweiten Einschleusförderstrecke der Einschleusvorrichtung hin zum Sorter.
d) Einbringen des Stückguts auf den Sorter.
Das Stückgut der ersten Klasse wird von der ersten Zuführförderstrecke auf die erste Einschleusförderstrecke oder von der zweiten Zuführförderstrecke auf die zweite Einschleusförderstrecke und das Stückgut der zweiten Klasse wird von der ersten und/oder zweiten Zuführförderstrecke auf die erste und die zweite Einschleusförderstrecke überführt.

Gemäß einer Ausführungsform erfolgt ein Aufliegen des Stückguts der zweiten Klasse zeitgleich auf der ersten und zweiten Einschleusförderstrecke.

Gemäß einer bevorzugten Ausführungsform kann das Verfahren durchgeführt werden mit gleichen und/oder unterschiedlichen Fördergeschwindigkeiten von der gesamten Einschleusvorrichtung oder Segmenten der ersten und zweiten Einschleusförderstrecken.

Ausführungsformen der Erfindung werden nachfolgend anhand der Figuren beispielsweise näher erläutert. Dabei zeigen:
- Figur 1: eine erfindungsgemäße Vorrichtung;
- Figur 2: einen Transport von Stückgütern erster und zweiter Klasse auf einer weiteren Ausführungsform der Vorrichtung;
- Figur 3: eine weitere Ausführungsform der Vorrichtung mit unterschiedlicher Anzahl von Segmenten der ersten und zweiten Einschleusförderstrecke;
- Figur 4: eine v-förmige Anstellung einzelner Förderstreckensegmente gemäß einer weiteren Ausführungsform;
- Figur 5: eine durch auf einzelnen Förderstreckensegmenten umlaufende Nocken erzielte sichere Auflage von Stückgütern; und
- Figur 6: eine Korrektur eines Schrägstellungsfehlers auf einer weiteren Ausführungsform einer erfindungsgemäßen Einschleusvorrichtung.

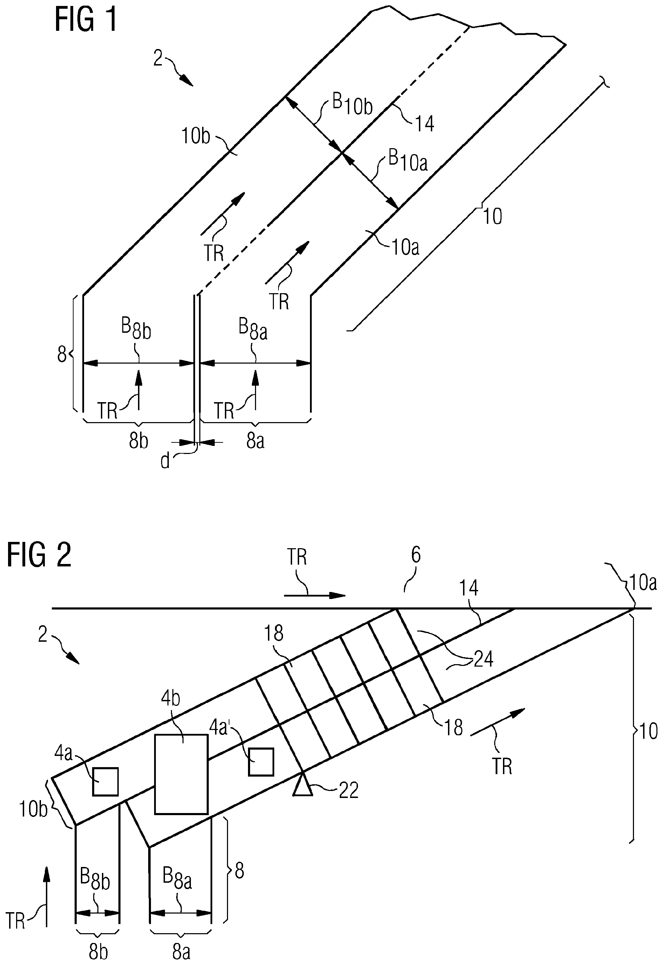

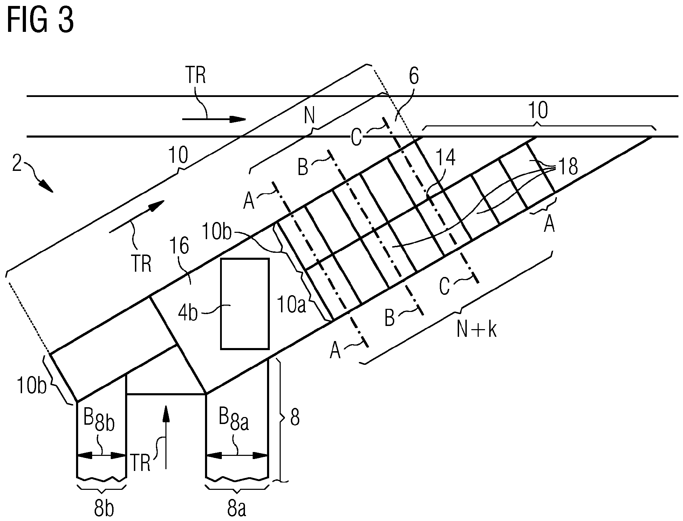

Figur 1 zeigt eine Vorrichtung 2 zum kontrollierten Fördern von Stückgütern einer ersten Klasse 4a und Stückgütern einer zweiten Klasse 4b gemäß einer Ausführungsform der Erfindung. Die Vorrichtung 2 umfasst eine Zuführvorrichtung 8 und eine Einschleusvorrichtung 10, die jeweils zwei eigene, jeweils parallel zueinander ausgerichtete Förderstrecken (Zuführförderstrecken 8a, 8b und Einschleusförderstrecken 10a, 10b) aufweisen, entlang deren Transportrichtungen TR bzw. Förderrichtungen Stückgüter 4 gefördert werden. Die Zuführförderstrecken 8a, 8b sind in einem Abstand d zueinander angebracht, welcher null sein kann, sehr gering wie in Figur 1 gezeigt, aber auch deutlich größer, wie in den Figuren 2 und 3 gezeigt.

Die Förderstrecken 8a, 8b, 10a, 10b weisen hier jeweils gleiche Breiten B₈ₐ, B_{8b}, B₁₀ₐ, B_{10b} auf, aber auch unterschiedliche Breiten B sind möglich. Bei stark unterschiedlichen Breiten wäre es denkbar, größere Stückgüter 4b tendenziell auf der breiteren Zuführförderstrecke 8a oder 8b hin zur Einschleusvorrichtung 10 zu transportieren. Dadurch, dass die Zuführvorrichtung 8 in einem Winkel in die Einschleusvorrichtung 10 mündet, wird ein Stückgut zweiter Klasse 4b, welches länglich ausgerichtet gerade noch auf nur einer der Zuführförderstrecken 8a oder 8b aufliegt, ohne Veränderung seiner Ausrichtung auf der Einschleusvorrichtung 10 auf beiden Einschleusförderstrecken 10a, 10b gemeinsam aufliegen. Die beiden Einschleusförderstrecken 10a, 10b agieren als gemeinsames Übergabeband. Stückgüter erster Klasse 4a sind im Verhältnis zur Breite der Förderstrecken 8a, 8a, 10a, 10b so klein, dass sie auch nach dem Überführen von der Zuführvorrichtung auf die Einschleusvorrichtung nur auf einer der beiden Einschleusförderstrecken 10a, 10b aufliegen. Die beiden Einschleusförderstrecken 10a, 10b können bis zu durchschnittlich große Stückgüter 4, die hier als Stückgüter erster Klasse 4a bezeichnet werden, einzeln mit ihrem Nenndurchsatz auf einen in Transportrichtung angeordneten, hier nicht gezeigten Sorter 6 aufschießen.

Die erste Zuführförderstrecke 8a mündet in die erste Einschleusförderstrecke 10a, die zweite Zuführförderstrecke mündet in die zweite Einschleusförderstrecke 10b, wobei dies jeweils direkt oder über einen weiteren Abschnitt der Einschleusvorrichtung 10 geschehen kann. Die Einschleusförderstrecken 10a, 10b sind direkt nebeneinander auf einer gemeinsamen Ebene angeordnet, wobei ihr Übergang möglichst geringe Störkonturen aufweist und somit barrierefrei ausgestaltet ist, so dass Stückgüter 4 gleichzeitig auf beiden Einschleusförderstrecken 10a, 10b aufliegen und beförderbar sind - ohne dass weder Stückgüter 4, noch Bandkanten der Einschleusförderstrecken 10a, 10b beschädigt werden bzw. möglichst geringen Verschleiß aufweisen. Die Einschleusförderstrecken 10a, 10b können sich, müssen sich aber nicht, über die gesamte Länge der Einschleusvorrichtung 10 erstrecken. Dies ist in Figur 1 mit der teils gestrichelten, teils durchgezogenen Linie angedeutet. In Figur 3 münden die Zuführförderstrecken 8a, 8b nicht direkt in die Einschleusförderstrecken 10a, 10b, wohingegen sie dies in Figur 2 tun.

Ein Stückgut zweiter Klasse 4b wird auf der ersten Zuführförderstrecke 8a hin zur Einschleusvorrichtung 10 transportiert und an diese übergeben. Nach dem Übergeben und weiteren Transportieren entlang der Transportrichtung TR liegt das Stückgut 4b dann sowohl auf der ersten, als auch auf der zweiten Einschleusförderstrecke 10a, 10b auf. Durch Synchronisierung beider Einschleusförderstrecken 10a, 10b wird nun das eine ("große") Stückgut zweiter Klasse 4b weiter entlang der Einschleusvorrichtung 10 transportiert und auf den Sorter 6 eingeschossen. Es ist auch möglich, die Ausrichtung eines auf beiden Einschleusförderstrecken 10a, 10b aufliegenden Stückguts 4 durch gezielte, leicht unterschiedliche Ansteuerung der Einschleusförderstrecken 10a, 10b zu korrigieren.

Dadurch, dass nur bei Stückgütern zweiter Klasse 4b für den Transport von einem Stückgut 4b beide Einschleusförderstrecken 10a, 10b belegt sind, ansonsten aber beide Einschleusförderstrecken 10a, 10b gleichzeitig Stückgüter 4a übernehmen und einschießen können, verdoppelt sich der Durchsatz von ("kleinen") Stückgütern erster Klasse 4a im Vergleich zu einer Vorrichtung 2 mit nur einer Zuführförderstrecke 8a und zwei Einschleusförderstrecken 10a, 10b.

In allen gezeigten Ausführungsformen erfahren die Stückgüter 4a, 4b eine Rechtskurve beim Überführen von der Zuführvorrichtung 8 auf die Einschleusvorrichtung. Eine spiegelbildliche Anordnung sowie andere Winkel sind jedoch selbstverständlich ebenso möglich und sollen vom Schutzbereich umfasst werden.

Figur 2 zeigt einen Transport von Stückgütern erster und zweiter Klasse 4a, 4b auf einer Vorrichtung 2 gemäß einer weiteren Ausführungsform der Erfindung. Die Zuführvorrichtung 8 mündet seitlich in die Einschleusvorrichtung 10 und die Einschleusvorrichtung 10 mündet seitlich in den Sorter 6. Sowohl die Zuführvorrichtung 8, als auch die Einschleusvorrichtung 10 sind ansteuerbar ausgestaltet. Hierzu umfasst die Vorrichtung 2 eine mit ihr verbindbare Steuerung, die adaptiert ist, die Einschleusvorrichtung 10 anzusteuern. Die Einschleusförderstrecken 10a, 10b umfassen individuell ansteuerbare Segmente, die hintereinander entlang der Transportrichtung TR der Einschleusförderstrecken 10a, 10b von der Zuführvorrichtung 8 hin zum Sorter 6 angeordnet sind und typischerweise jeweils eigene Förderbänder oder andere Fördermittel wie Rollenförderer o.ä. aufweisen. Hier sind die Segmente 18 als Beschleunigungsbänder ausgestaltet und adaptiert, die Stückgüter 4 so zu beschleunigen, dass ihre Fördergeschwindigkeit auf die Sortergeschwindigkeit angepasst ist, also für einen Einschuss auf den Sorter 6 optimal ist. Unmittelbar vor dem Sorter 6 befinden sich Dreiecksförderer 24, die üblicherweise als Dreiecksbänder, welche typischerweise Streifenbänder gestaffelter Länge umfassen, ausgestaltet sind.

Die Vorrichtung 2 umfasst eine als Messlichtgitter ausgestaltete Detektionseinheit 22, die in Figur 2 vor Beginn der Segmente 18 angeordnet ist. Die Detektionseinheit 22 erfasst Förderparameter der Stückgüter 4a, 4a, wobei hierbei zumindest ihre Lage auf der Vorrichtung 2 und evtl. noch ihre Größe zählt. Wenn eine Ausrichtungsveränderung erzielt werden soll, auch noch ihre Orientierung auf der Vorrichtung. Ein weiterer Förderparameter, der sinnvoll zu erfassen, bei guter Haftung zwischen Stückgut 4 und Auflageflächen 12 der Förderstecken 8a, 8b, 10a, 10b aber auch anderweitig, beispielsweise von der Steuerung, ermittelt werden kann, ist die Fördergeschwindigkeit des detektierten Stückguts 4.

In einer zweckmäßigen Ausgestaltung ist die Detektionseinheit 22 ein vertikales, vor den Beschleunigungsbändern angeordnetes Lichtschrankengitter. Aus der detektierten Abdeckung des Lichtschrankengitters können sowohl Größe, als auch Position des passierenden Stückguts 4 ermittelt werden. Wegen der Stückgüter zweiter Klasse 4b darf die Detektionseinheit 22 keine mechanische Abstützung zwischen den Einschleusförderstrecken 10a, 10b aufweisen. Aus diesem Grund wird die Detektionseinheit 22 als brückenartige Konstruktion ausgestaltet mit Abstützung auf denjenigen Seiten der Einschleusvorrichtung 10, die dem Übergang 14 zwischen erster und zweiter Einschleusförderstrecke 10a, 10b abgewandt sind. Die Detektionseinheit 22 wird also an den äußeren Rändern und/oder oberhalb der Einschleusvorrichtung 10 befestigt. Gemäß einer Ausführungsform ist die Detektionseinheit 22 als gemeinsame Detektionseinheit 22 für beide Einschleusförderstrecken 22 ausgestaltet, gemäß einer weiteren Ausführungsform nur als elektronisch aufgeteilte Detektionseinheit 22.

Wenn ein Stückgut zweiter Klasse 4b auf beiden Einschleusförderstrecken 10a, 10b aufliegt wie in Figur 2 gezeigt oder auf die Einschleusvorrichtung 10 eingebracht werden soll, müssen je nach Belegung der Förderstrecken 8a, 8b, 10a, 10b eine und/oder mehrere der Förderstrecken 8a, 8b, 10a, 10b für kurze Zeit angehalten werden, damit keine Kollisionen mit weiteren Stückgütern 4a, 4b geschehen. Die Stückgüter 4a, 4b werden hierzu auf den Zuführförderstrecken 8a, 8b vor ihrem Überführen auf die Einschleusvorrichtung 10 detektiert, hierzu wird eine weitere Detektionseinheit 22 gegen oder am Ende der Zuführvorrichtung 8 angeordnet.

Ein Anhalten einiger oder aller Förderstrecken 8a, 8b, 10a, 10b oder zumindest langsameres, verzögertes Transportieren der Stückgüter 4a, 4b kann auch erforderlich sein, um einen Einschuss auf einen schon belegten Carrier des Sorters 6 zu vermeiden.

Stückgüter zweiter Klasse 4b können sowohl auf der ersten, als auch auf der zweiten Zuführförderstrecke 8a, 8b hin zur Einschleusvorrichtung 10 transportiert werden. Wenn das Stückgut zweiter Klasse 4b auf der ersten Zuführförderstrecke 8a hin zur Einschleusvorrichtung 10 transportiert wird, kann es, muss aber nicht, erst vollständig auf die Einschleusvorrichtung 10 überführt werden, bevor es weiter entlang der Transportrichtung TR der Einschleusvorrichtung transportiert wird. Wenn das Stückgut zweiter Klasse 4b auf der zweiten Zuführförderstrecke 8b hin zur Einschleusvorrichtung 10 transportiert wird, sollte es hingegen bereits entlang der Transportrichtung TR der Einschleusvorrichtung 10 transportiert werden, bevor es vollständig auf die Einschleusvorrichtung 10 überführt worden ist. Hierdurch wird vermieden, dass es über den linken Rand der zweiten Einschleusförderstrecke 10b hinausragt. Eine Anordnung von Einschleusvorrichtung 10 und Zuführvorrichtung 8 und eine Vermeidung von Störkonturen bei der Realisierung derart, dass das Stückgut 4b nur über kleine Lücken überführt werden muss bzw. eine sorgfältige Abstützung des Stückguts 4b während des Überführens ist hierbei erforderlich, damit das Stückgut 4b nicht abkippt oder verkantet.

Figur 3 zeigt eine weitere Ausführungsform der Vorrichtung 2 mit unterschiedlicher Anzahl von Segmenten der ersten und zweiten Einschleusförderstrecke 10a, 10b. Diese Ausführungsform hat kein geteiltes, sondern ein gemeinsames Übergabeband 16, welches Stückgüter zweiter Klasse 4b von der ersten Zuführstrecke 8a aufnimmt. Dadurch existiert keine Bandkante, so wie beim Übergang zwischen erster und zweiter Einschleusförderstrecke 10a, 10b wie in Figur 2. Das Übergabeband 16 von Figur 3 wird von der Einschleusvorrichtung 10 umfasst und mündet in die erste und zweite Einschleusförderstrecke 10a, 10b. Die zweite Einschleusförderstrecke 10b ist zweigeteilt und befindet sich sowohl vor, als auch nach dem Übergabeband 16.

Anschließend an das Übergabeband 16 umfasst die zweite Einschleusförderstrecke 10b fünf, allgemein N, Segmente 18, die hier als Beschleunigungsbänder (High-Speed-Induction) ausgestaltet sind, welche einen bestimmten Durchsatz erreichen. Die Ansteuerung der sieben, allgemein N+k, Segmente 18 der ersten Einschleusförderstrecke 10a wird durch die Vorbelegung der zweiten Einschleusförderstrecke 10b bestimmt. Aus diesem Grund wird der geometrisch bedingte längere Weg zum Sorter 6 mit weiteren zwei, allgemein k, Beschleunigungsbändern bzw. Segmenten 18, sowie einem Lückenfüller A überbrückt, der bei gleichartiger Ausgestaltung auch zu den Segmenten 18 gezählt werden kann, damit die auf den Sorter 6 einschießenden Dreiecksförderer 24 annähernd gleich ausgestaltet werden können. Die Dreiecksförderer 24 werden angepasst auf die Carrier-Positionen des Sorters 6 und auf die Sorter-Geschwindigkeit betrieben. Die Segmente 18 sind mit individuell ansteuerbarer Fördergeschwindigkeit antreibbar ausgestaltet, wobei die individuelle Ansteuerbarkeit der Fördergeschwindigkeit auch ein koordiniertes Ansteuern der Segmente 18 und der Einschleusvorrichtung 10 umfasst.

Durch die weiteren zwei, allgemein k, Segmente 18 ist die erste Einschleusförderstrecke 10a in der Lage, normal lange Stückgüter 4, typischerweise Stückgüter erster Klasse 4a, länger bis zu einer möglichen Lücke auf dem Sorter 6, also einem freien Carrier, zu verschieben. Sie kann damit den Durchsatz der zweiten Einschleusförderstrecke 10a erreichen.

Gemäß weiteren Ausführungsformen ist die Vorrichtung 2 analog zur Vorrichtung von Figur 3 ausgestaltet mit einem gemeinsamen Übergabeband 16, jedoch weist nur die erste oder die zweite Zuführstrecke 10a, 10b oder sogar keine der Zuführstrecken 10a, 10b Segmente 18 auf. Die zweite Zuführförderstrecke 8b mündet entweder direkt oder über einen Abschnitt der zweiten Einschleusförderstrecke 10b in das Übergabeband 16.

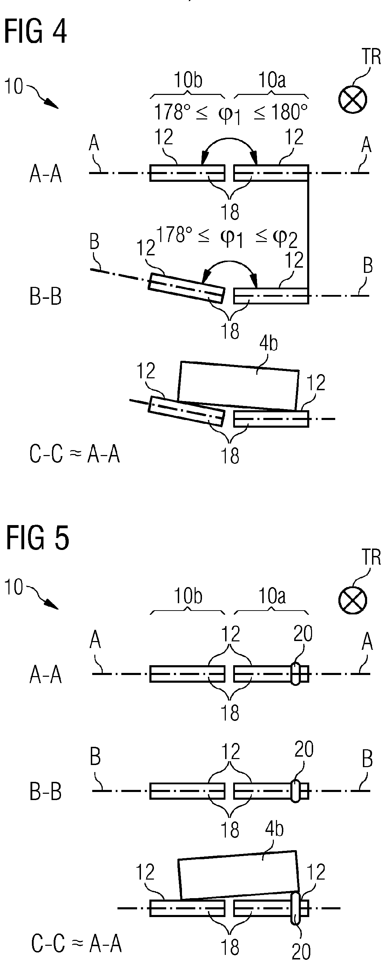

Figur 4 zeigt eine weitere Ausführungsform, die - ebenso wie die Ausführungsform von Figur 5 - mit allen weiteren Ausführungsformen kombinierbar ist und für die Korrektur eines Ausrichtungsfehlers von Stückgütern 4 auf den Einschleusförderstrecken 10a, 10b herangezogen werden kann. Eine Korrektur von Ausrichtungsfehlern ist insbesondere bei relativ großen Stückgütern zweiter Klasse 4b erforderlich, damit das Carrier-Format des Sorters 6 nicht überragt wird. Durch voneinander abweichende Ansteuerung der beiden Einschleusförderstrecken 10a, 10b lässt sich ein auf eben diesen beiden Einschleusförderstrecken 10a, 10b aufliegenden Stückgut 4b verdrehen. Da Pakete und andere Stückgüter 4b nicht immer komplett eben sind und somit nicht sicher vollflächig auf den Auflagefläche 12 der Einschleusförderstrecken aufliegen, ist bei komplett ebener Auflageflächen 12 ein genau kontrolliertes Verdrehen des Stückguts 4b zur Korrektur seiner Ausrichtung nicht zuverlässig zu erreichen. Für ein kontrolliertes Verdrehen muss sichergestellt werden, dass beide Zuführförderstrecken 10a, 10b zur gleichen Zeit immer hinreichend Kontakt zum Stückgut 4b haben.

Eine Möglichkeit, stets einen hinreichenden Kontakt zu erreichen, wird als Ausführungsform in Figur 5 gezeigt, nun soll zunächst das in Figur 4 gezeigte Neigen der Auflageflächen 12 zueinander diskutiert werden. Entweder wird wie gezeigt nur die Auflagefläche 12 eines Segments von nur der zweiten Einschleusförderstrecke 10b geneigt, was beispielsweise durch Neigung des ganzen Segments 18 erzielt werden kann, oder aber beide Auflageflächen der benachbarten Segmente 18 beider Einschleusförderstrecken 10a, 10b werden beide zueinander geneigt. Technisch einfacher zu realisieren ist die erste Variante, da hierbei nur eine Einschleusförderstrecken 10b geneigt werden muss.

Für eine sichere Auflage sind bereits wenige Winkelgrad und somit eine sehr leichte Neigung ausreichend. Das Stückgut 4b hat dann an seinen Rändern als Auflagepunkte sicheren Kontakt zu beiden Einschleusförderstrecken 10a, 10b, so dass sich durch einen Unterschied der Fördergeschwindigkeiten beider Einschleusförderstrecken 10a, 10b oder ein zeitversetztes Beschleunigen nach dem gleichen Profil zuverlässig eine Verschiebung der Auflagepunkte und damit der Paketlage erreichen.

Damit die vom Stückgut 4b beim Übergang auf das geneigte Segment 18 zu überwindende Stufe nicht zu groß ist, ist entlang der Transportrichtung TR das erste geneigte Segment 18 der Einschleusförderstrecke 10b nur leicht geneigt, das nächste stärker usw. bis zur größten Überhöhung. Danach geht es wieder zurück auf ebenen Transport - je nach Empfindlichkeit der Stückgüter 4b schrittweise oder auch abrupt. Dies könnte auch mit einem verschränkten Förderband erreicht werden. Die sequentiell ansteigende Neigung ist in Figur 4 in Kombination mit Figur 3 durch 3 Schnitte (A-A, B-B, C-C) quer zu den Einschleusförderstrecken 10a, 10b angedeutet. Dieser Mechanismus zur Ausrichtungskorrektur kann, muss aber nicht nach der Detektionseinheit 22 auf den Segmenten 18 unmittelbar vor dem Sorter 6 geschehen, sondern könnte auch als eigenständige Teilstrecke vor der eigentlichen Einschussstrecke angeordnet sein. Allerdings ist die Funktionsvereinigung eine besonders kostengünstige Variante. Zur Ausrichtungskorrektur reicht eine irgendwie nach dem Überführen auf die Einschleusvorrichtung 10 gewonnene Information über die Ausrichtung aus.

Figur 5 zeigt, wie die Ausrichtungskorrektur mit einer in Transportrichtung TR endlos umlaufenden Nocke 20 erzielt werden kann. Figur 5 ist wie Figur 4 ebenfalls in Kombination mit Figur 3 zu sehen. Um den gleichen, ansteigenden Effekt wie in Figur 4 zu erzielen, wird jedes der Segmente mit einer jeweils entlang der Transportrichtung TR leicht höheren Nocke 20 ausgerüstet. Auch hier ist bei A-A bzw. C-C eine geringere Höhe und das Maximum liegt bei B-B. Prinzipiell kann die erste und/oder die zweite Einschleusförderstrecke über ihre gesamte Länge und/oder nur segmentweise umlaufende Nocken 20 aufweisen.

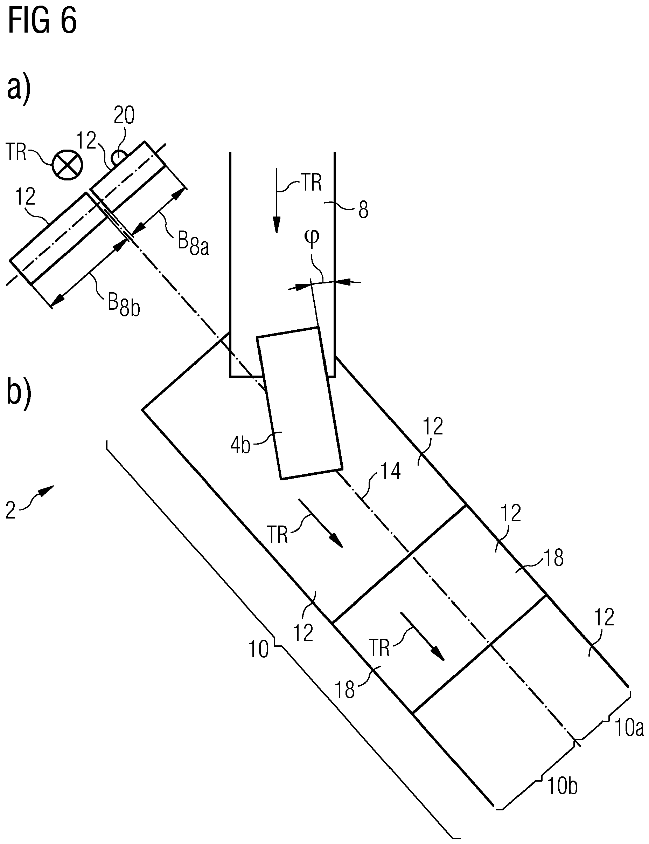

Eine weitere Möglichkeit zur Lagekorrektur ist gemäß einer weiteren, in Figur 6 gezeigten Ausführungsform erzielbar durch Anordnung der zweiten Einschleusförderstrecke 10b leicht unterhalb der der ersten Einschleusförderstrecke 10a. Figur 6a zeigt einen Querschnitt der Vorrichtung 2, Figur 6b dieselbe Vorrichtung 2 in Aufsicht. Durch den Höhenunterschied kippt ein auf die Einschleusvorrichtung 10 überführtes Stückgut zweiter Klasse 4b von der ersten Einschleusförderstrecke 10a auf die zweite Einschleusförderstrecke 10b ab und erfährt durch seine durch das Abkippen zustande gekommene brückenartige Auflage analog zu der in Figur 4 und 5 beschriebenen Situation eine Verdrehung, die unter anderem von der Lage des Stückguts 4b abhängig ist. Je länger das Stückgut 4b, desto stärker die Verdrehung. Anstelle eines Höhenunterschieds kann die erste Einschleusförderstrecke 10a auch eine Nocke 20 (gestrichelt angedeutet) aufweisen. In Fällen, in denen die Schrägstellung ϕ bereits auf der Zuführvorrichtung 8 besteht, kann eine leichte Korrektur der Verdrehung bereits während des Übergangs auf die Einschleusvorrichtung 10 erfolgen. Damit dies möglich ist, ist die Zuführvorrichtung 8 leicht oberhalb der Einschleusvorrichtung 10 angeordnet.

### Bezugszeichenliste

- 2: Vorrichtung
- 4a: Stückgut einer ersten Klasse
- 4b: Stückgut einer zweiten Klasse
- 6: Sorter
- 8: Zuführvorrichtung
- 8a: erste Zuführförderstrecke
- 8b: zweite Zuführförderstrecke
- 10: Einschleusvorrichtung
- 10a: erste Einschleusförderstrecke
- 10b: zweite Einschleusförderstrecke
- 12: Auflagefläche
- 14: Übergang zwischen erster und der zweiter Einschleusförderstrecke
- 16: Übergabeband
- 18: Segmente einer Einschleusförderstrecke
- 20: Nocke
- 22: Detektionseinheit
- 24: Dreiecksförderer
- d: Abstand zwischen den Zuführförderstrecken 8a, 8b

## Patentansprüche

1. Vorrichtung (2) zum kontrollierten Fördern von Stückgütern einer ersten Klasse (4a) und Stückgütern einer zweiten Klasse (4b) hin zu einem Sorter (6), umfassend eine Zuführvorrichtung (8) und eine Einschleusvorrichtung (10), wobei:
- die Zuführvorrichtung (8) seitlich in die Einschleusvorrichtung (10) und die Einschleusvorrichtung (10) seitlich in den Sorter (6) mündet;
- die Zuführvorrichtung (8) eine erste und eine zweite Zuführförderstrecke (8a, 8b) umfasst, die direkt aneinander angrenzend oder in einem Abstand (d) zueinander angeordnet sind;
- die Einschleusvorrichtung (10) eine erste und eine zweite Einschleusförderstrecke (10a, 10b) umfasst, deren Auflageflächen (12a, 12b) im Wesentlichen auf gleicher Höhe nebeneinander angeordnet sind und die sich über die gesamte oder mindestens einen Abschnitt der Einschleusvorrichtung (10) erstrecken;
- die erste Zuführförderstrecke (8a) so in die Einschleusvorrichtung (10) mündet, dass sie direkt oder über einen Abschnitt der Einschleusvorrichtung (10) in die erste Einschleusförderstrecke (10a) mündet;
- die zweite Zuführförderstrecke (8b) so in die Einschleusvorrichtung (10) mündet, dass sie direkt oder über einen Abschnitt der Einschleusvorrichtung (10) in die zweite Einschleusförderstrecke (10b) mündet;
- ein Übergang (14) zwischen der ersten und der zweiten Einschleusförderstrecke (10a, 10b) barrierefrei ausgestaltet ist, so dass ein Stückgut der zweiten Klasse (4b) zugleich auf der ersten und auf der zweiten Einschleusförderstrecke (10a, 10b) beförderbar ist.

2. Vorrichtung (2) nach Anspruch 1, zudem umfassend eine mit der Vorrichtung (2) verbindbare Steuerung, die adaptiert ist, die Vorrichtung (2), insbesondere die Zuführvorrichtung (8) und/oder die Einschleusvorrichtung (10), so anzusteuern, dass
a) Stückgüter der ersten Klasse (4a) von der ersten Zuführförderstrecke (8a) auf die erste Einschleusförderstrecke (10a) transportiert werden;
b) Stückgüter der ersten Klasse (4a) von der zweiten Zuführförderstrecke (8b) auf die zweite Einschleusförderstrecke (10a) transportiert werden; und
c) das Stückgut der zweiten Klasse (4b) von der ersten und/oder zweiten Zuführförderstrecke (8a, 8b) so hin zur Einschleusvorrichtung (10) transportiert wird, dass das Stückgut der zweiten Klasse (4b) zugleich von der ersten und zweiten Einschleusförderstrecke (10a, 10b) transportiert wird.

3. Vorrichtung (2) nach einem der vorangegangen Ansprüche, **dadurch gekennzeichnet, dass**
die erste und/oder die zweite Einschleusförderstrecke (10a, 10b) individuell ansteuerbare Segmente (18) aufweist, wobei die Segmente (18) hintereinander entlang einer Förderrichtung der Stückgüter (4a, 4b) von der Zuführvorrichtung (8) hin zum Sorter (6) angeordnet sind.

4. Vorrichtung (2) nach einem der vorangegangen Ansprüche, **dadurch gekennzeichnet, dass**
die Einschleusvorrichtung (10) und/oder die erste Einschleusförderstrecke (10a) und/oder die zweite Einschleusförderstrecke (10b) jeweils über ihre gesamte Länge oder segmentweise mit individuell ansteuerbarer Fördergeschwindigkeit antreibbar ausgestaltet sind.

5. Vorrichtung (2) nach einem der vorangegangen Ansprüche, zudem umfassend
eine Detektionseinheit (22), beispielsweise ein Messlichtgitter, die ausgestaltet ist, Förderparameter eines Stückguts (4a, 4b) wie seine Lage und/oder Größe und/oder Orientierung und/oder Fördergeschwindigkeit auf der Vorrichtung (2) zu erfassen.

6. Vorrichtung (2) nach Anspruch 5, **dadurch gekennzeichnet, dass**
eine Befestigung der Detektionseinheit (22) auf einer ersten und/oder zweiten Seite der Einschleusvorrichtung (10) angeordnet ist, wobei die erste und die zweite Seite dem Übergang (14) zwischen der ersten und der zweiten Einschleusförderstrecke (10a, 10b) abgewandt sind.

7. Vorrichtung (2) nach einem der vorangegangen Ansprüche, **dadurch gekennzeichnet, dass**
die Einschleusvorrichtung (10) ein nach den Zuführförderstrecken (8a, 8b) angeordnetes Übergabeband (16) umfasst, welches zugleich in die erste und die zweite Einschleusförderstrecke (10a, 10b) mündet.

8. Vorrichtung (2) nach einem der vorangegangen Ansprüche, **dadurch gekennzeichnet, dass**
die Auflagefläche (12) der ersten und/oder zweiten Einschleusförderstrecke (10a, 10b) über ihre gesamte Länge oder zumindest teilweise hin zu dem Übergang (14) zwischen der ersten und der zweiten Einschleusförderstrecke (10a, 10b) fallend ausgerichtet ist, so dass die Auflageflächen (12) eine Neigung zueinander aufweisen.

9. Vorrichtung (2) nach Anspruch 8, **dadurch gekennzeichnet, dass**
die Neigung der Auflageflächen (12) einzelner Segmente (18) der ersten und/oder der zweiten Einschleusförderstrecke (10a, 10b) hin zu dem Übergang (14) entlang der Förderrichtung der Stückgüter (4a, 4b) hin zum Sorter (6) ansteigt.

10. Vorrichtung (2) nach einem der vorangegangen Ansprüche, **dadurch gekennzeichnet, dass**
die erste und/oder die zweite Einschleusförderstrecke (10a, 10b) entlang einer Förderrichtung der Stückgüter (4a, 4b), welche von der Zuführvorrichtung (8) hin zum Sorter (6) weist, über ihre gesamte Länge und/oder segmentweise umlaufende Nocken (20) aufweist.

11. Vorrichtung (2) nach einem der Ansprüche 5 bis 10, **dadurch gekennzeichnet, dass**
die Steuerung adaptiert ist, die Vorrichtung (2), insbesondere die erste und/oder die zweite Einschleusförderstrecke (10a, 10b), so anzusteuern, dass die von der Detektionseinheit (22) erfassten Förderparameter manipuliert werden, so dass ein zugleich von der ersten und zweiten Einschleusförderstrecke (10a, 10b) transportiertes Stückgut der zweiten Klasse (4b) in seiner Ausrichtung korrigiert werden kann.

12. Vorrichtung (2) nach einem der Ansprüche 3 bis 11, **dadurch gekennzeichnet, dass**
die erste und/oder die zweite Einschleusförderstrecke (10a, 10b) Beschleunigungsbänder (High-Speed-Induction) umfassen.

13. Verfahren zum kontrollierten Fördern von Stückgütern einer ersten Klasse (4a) und Stückgütern einer zweiten Klasse (4b) hin zu einem Sorter (6), umfassend die Verfahrensschritte:
a) Fördern eines Stückguts der ersten (4a) und/oder zweiten Klasse (4b) auf einer ersten und/oder zweiten Zuführförderstrecke (8a, 8b) einer Zuführvorrichtung (8);
b) Überführen des Stückguts (4a, 4b) von der Zuführvorrichtung (8) auf eine Einschleusvorrichtung (10);
c) Fördern des Stückguts (4a, 4b) auf einer ersten und/oder zweiten Einschleusförderstrecke (10a, 10b) der Einschleusvorrichtung (10) hin zum Sorter (6);
d) Einbringen des Stückguts (4a, 4b) auf den Sorter (6); wobei
das Stückgut der ersten Klasse (4a) von der ersten Zuführförderstrecke (8a) auf die erste Einschleusförderstrecke (10a) oder von der zweiten Zuführförderstrecke (8b) auf die zweite Einschleusförderstrecke (10b) und das Stückgut der zweiten Klasse (4b) von der ersten und/oder zweiten Zuführförderstrecke (8a, 8b) auf die erste und die zweite Einschleusförderstrecke (10, 10b) überführt wird.

14. Verfahren nach Anspruch 13, **gekennzeichnet durch** Aufliegen des Stückguts der zweiten Klasse (4b) zeitgleich auf der ersten und zweiten Einschleusförderstrecke (10a, 10b) .

15. Verfahren nach einem der Ansprüche 13 bis 14, **gekennzeichnet durch**
gleiche und/oder unterschiedliche Fördergeschwindigkeiten von der gesamten Einschleusvorrichtung (10) oder Segmenten (18) der ersten und zweiten Einschleusförderstrecken (10a, 10b).
